# EUROPÄISCHE PATENTSCHRIFT

(11) **EP 0 867 526 B1**
(45) Veröffentlichungstag und Bekanntmachung des Hinweises auf die Patenterteilung: **28.04.1999**
(21) Anmeldenummer: 97103441.8
(22) Anmeldetag: 03.03.1997
(51) Int. Cl.: C23D 1/02

(54) **Vorrichtung und Verfahren zum Herstellen von Emailfritten**
Apparatus and process for making enamel frits
Appareil et procédé pour fabriquer de la fritte d'émail

(43) Veröffentlichungstag der Anmeldung: 30.09.1998
(73) Patentinhaber: Wendel GmbH Emailfabrik, 35683 Dillenburg (DE)
(72) Erfinder: Voss, Eckhard, Dipl.-Ing. (FH), 35685 Dillenburg (DE); Svet, Marjan, Meister Abt. Schlosserei, 35684 Dillenburg (DE)
(74) Vertreter: Olbricht, Karl Heinrich, Dipl.-Phys.

(56) Entgegenhaltungen:
- FR-A- 795 874
- DATABASE WPI Section Ch, Derwent Publications Ltd., London, GB; Class M13, AN 72-71887T XP002037774 & SU 331 124 A (UKRAINIAN METALLURGICAL W)
- GLASS AND CERAMICS, Bd. 32, Nr. 11/12, 1975, NEW YORK US, Seite 838 XP002037773 Z.A. MARADOVA ET AL.: "dry granulation of enamel fritt"

## Beschreibung

Die Erfindung betrifft eine Vorrichtung gemäß dem Oberbegriff der Ansprüche 1 und 5 sowie ein Verfahren zum Herstellen von Emailfritten nach dem Oberbegriff von Anspruch 31.

Für das Emaillieren von Metallen verwendet man üblicherweise sogenannte Emailfritten, die aus Rohstoffgemischen (Gemengen) durch Schmelzen und anschließendes Abschrecken, in Ausnahmefällen durch Sintern hergestellt werden. Der Grundprozeß besteht dabei im wesentlichen in der Überführung von Quarz durch Schmelzreaktionen mit basischen Komponenten und Borsäure in eine zur Glasbildung befähigte Silikatschmelze und nach Erstarren in einen chemisch beständigen, glasartigen festen Körper (Emailfritte).

Das Gemenge, eine Mischung aus Quarzsand, Tonerde, Feldspat, Borax, Kalkstein, Soda und anderen Stoffen, beispielsweise Trübungs- oder Farbmitteln, wird je nach Anforderung an den gewünschten Emailüberzug zusammengestellt und bei Temperaturen zwischen 1.100°C und 1.400°C eingeschmolzen. Als Schmelzaggregat verwendet man beispielsweise einen rotierenden Trommelofen, in dem das Gemenge nach stufenweisem Anschmelzen unter ständigem Drehen mit etwa 0,3 U/min bis 0,5 U/min geschmolzen wird. Das Fassungsvermögen eines Drehrohrofens beträgt typisch 500 kg bis 1.000 kg, z.T. bis 2.000 kg Gemenge. Hat die Schmelze einen gewünschten, technisch festgelegten Schmelzzustand erreicht, wird sie aus dem Trommelofen abgelassen und in fließendem Wasser oder durch Anspritzen mit einem kräftigen Wasserstrahl abgeschreckt und dabei granuliert. Je nach Temperatur des Kühlwassers entstehen Granalien unterschiedlicher Größe. Anzustreben sind jedoch möglichst gleichmäßige Granalien, um die anschließende Weiterverarbeitung, z.B. das Mahlen, zu verbessern. Problematisch ist, daß der Abschreckprozeß meist über einen relativ kurzen Weg erfolgt. Dies hat einen hohen Energieaufwand mit entsprechend hohen Energieverlusten zur Folge. Darüber hinaus fallen durch die Wasserkühlung erhebliche Mengen an belastetem Schmutzwasser an, dessen Reinigung bzw. Entsorgung aufwendig und teuer ist.

Neben dem diskontinuierlich arbeitenden Trommelschmelzofen ist auch die Verwendung von kontinuierlich betriebenen Wannenöfen mit Fassungsvermögen bis zu 2.000 kg bekannt. Das vorbereitete Gemenge wird über eine Einlauföffnung dem Heizraum zugeführt. Dort bildet sich eine Schmelzschicht, die nach Erreichen des erforderlichen Schmelzzustandes am Ende des Heizraumes durch eine Austrittsöffnung ausläuft. Die Verweilzeit des Gemenges im Ofen beträgt beispielsweise 15 min bis 25 min. Das Granulieren der kontinuierlich auslaufenden Schmelze erfolgt durch Abschrecken zwischen wassergekühlten Walzen, die unterhalb der Auslauföffnung angeordnet sind (vgl. dazu z.B. DE-C-620 271). Unter den Walzen gelagerte Brecher erzeugen relativ gleichmäßige Schuppen von 0,8 mm bis 2 mm Dicke. Das auf diese Weise gewonnene Granulat fällt ohne belastetes Abwasser an. Problematisch ist allerdings der schwer zu steuernde Schmelzprozeß innerhalb des Ofens, da der Schmelzzustand wesentlich von der nur schwer zu kontrollierenden Verweildauer im Ofen abhängt.

Ziel der Erfindung ist es, ein Verfahren und eine Vorrichtung zur Herstellung von Emailfritten zu schaffen, das mit möglichst geringem Energieaufwand aus einer definierten Schmelze Granalien und damit Fritten von hoher Güte und Homogenität erzeugt. Der Kühlwasserverbrauch soll drastisch reduziert und eine Wasserkontamination weitestgehend vermieden werden.

Hauptmerkmale der Erfindung sind in den Ansprüchen 1, 5 und 31 angegeben. Ausgestaltungen sind Gegenstand der Ansprüche 2 bis 4, 6 bis 30 sowie 32 und 33.

Bei einer Vorrichtung zur Herstellung von Emailfritten aus einem Rohstoffgemisch (Gemenge) mit einem diskontinuierlich betriebenen Drehrohrofen zum Einschmelzen des Gemenges zu einer feuerflüssigen Schmelze und wenigstens einer unter einer Ablaßöffnung des Drehrohrofens angeordneten Kühl- und Granuliereinrichtung zum Abschrecken und Granulieren der aus der Ablaßöffnung austretenden Schmelze weist die Kühl- und Granuliereinrichtung erfindungsgemäß wenigstens zwei einander zugeordnete, von einem Kühlmittel durchströmte Kühlflächen auf, die relativ zur Ablaßöffnung bewegbar sind. Dadurch ist es möglich, die gesamte Schmelzcharge beim Ablassen aus dem Ofen gleichmäßig auf den Kühlflächen zu verteilen. Deren gesamte Kühlkapazität wird optimal genutzt; selbst große Chargen an Gemenge können in sehr kurzer Zeit abgeschreckt und anschließend granuliert werden. Dabei wird eine überraschend hohe Qualität der Emailfritten erzielt.

Die in den Unter- und Nebenansprüchen 2 bis 33 angegebenen Maßnahmen unterstützen die Vorteile und Wirkungen der Merkmale von Anspruch 1 auf vorteilhafte Weise. So gewährleistet der besonders bemessene und/oder einstellbare Abstand zwischen den Kühl- und Brecherwalzen das vollständige Erstarren der Schmelze. Fallen größere Chargen von Gemenge an, kann in den Fallraum zwischen Kühl- und Brecherwalzen ein Kühlmittel zusätzlich eingesprüht werden.

Die erfindungsgemäße Vorrichtung und das neue Verfahren gewährleisten eine hohe Flexibilität der Produktion, da nach jeder Schmelze die Emailtypen entsprechend neuen Gegebenheiten geändert werden können. Ein weiterer Vorteil besteht darin, daß das in der Kühleinrichtung verwendete Kühlmittel, Wasser, bevorzugt nicht durch direkten Kontakt mit der Schmelze kontaminiert werden kann. Die Kühlflächen der Kühl- und Granuliereinrichtung werden optimal genutzt, wodurch ein rasches Abkühlen der gesamten Charge erreicht wird. Das über die Kühlflächen erwärmte Wasser kann zwecks Wärmerückgewinnung beliebig genutzt werden, was zu insgesamt sehr ökonomischem Verfahren wesentlich beiträgt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorrichtung zur Herstellung von Emailfritten,
- Fig. 2: eine Stirnansicht einer Kühlvorrichtung, teilweise im Schnitt, und
- Fig. 3: eine schematisches Ablaufdiagramm eines Verfahrens zur Herstellung von Emailfritten.

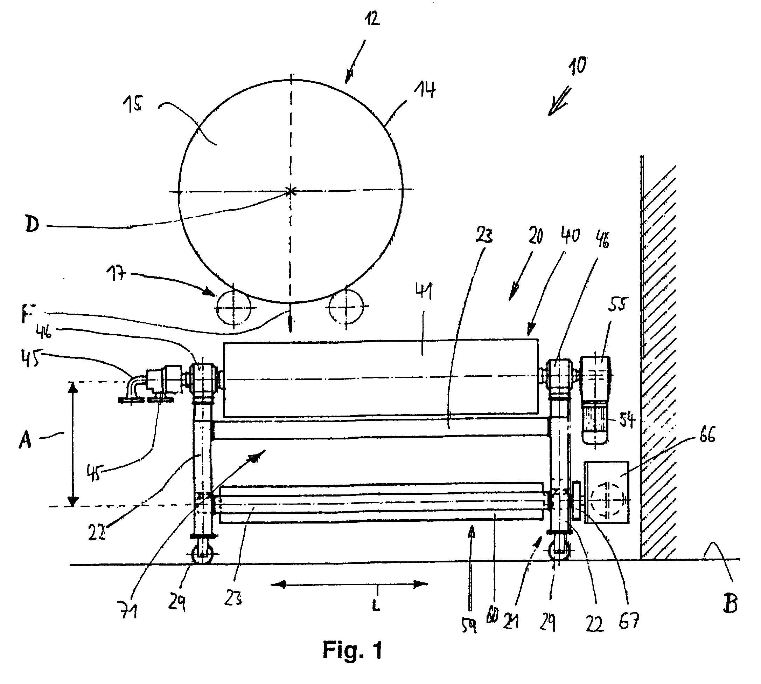

Die in Fig. 1 allgemein mit 10 bezeichnete Vorrichtung zum Herstellen von Emailfritten besitzt einen Trommelschmelzofen 12 zum chargenweisen Einschmelzen eines Rohstoffgemisches (Gemenges) sowie eine darunter angeordnete, kombinierte Kühl- und Granuliereinrichtung 20 zum Abschrecken und Granulieren der in dem Schmelzofen 12 bereiteten Emailschmelze.

Der Trommelschmelzofen 12 ist als Drehrohrofen mit einem feuerfest ausgemauerten Stahlmantel 14 ausgebildet, der um eine horizontale Drehachse D drehbar gelagert ist. An seinen Stirnseiten 15 weist der Ofen 12 geeignete Offnungen für einen (nicht dargestellten) Öl- oder Gasbrenner sowie für einen (ebenfalls nicht gezeichneten) Abgas-Auslaß auf. Mittels eines an der Außenseite des Stahlmantels 14 angreifenden Antriebs 17 kann der Drehrohrofen 12 während des Schmelzvorgangs in eine gleichmäßige Rotation versetzt werden. Die (nicht sichtbare) Ausmauerung des Ofens 12 besteht wie üblich aus Schamotte oder aus saurer Schamottestampfmasse. Etwa in der Mitte des Stahlmantels 14 ist eine verschließbare Ein- bzw. Ablaßöffnung vorgesehen (nicht dargestellt), durch die das Gemenge eingefüllt und aus der die feuerflüssige Schmelze nach Erreichen eines gewünschten Schmelzzustandes abgelassen werden kann.

Fig. 1 zeigt die verfahrbare Kühl- und Granuliervorrichtung 20 in einer Endposition. In einem auf Rollen 29 gelagerten Gestell 21 sind zwei parallel verlaufende, auf einem ersten Wellenpaar 43 gelagerte Kühlwalzen 40 angeordnet. Diese liegen horizontal nebeneinander und bilden zwischen ihren glatten Mantelflächen 41 einen vertikalen Spalt 42. An jeder Welle 44 des ersten Wellenpaars 43 greift endseitig ein Antriebsmotor 54 mit einem Getriebe 55 an, der die Kühlwalzen 40 in gleichmäßige, gegenläufige Rotation versetzt. Das Gestell 21 ist von vier Eckstützen 22 sowie von Längs- und Querträgern 23, 24, 25 gebildet, die mittels Schweiß- und/oder Schraubverbindungen fest miteinander verbunden sind.

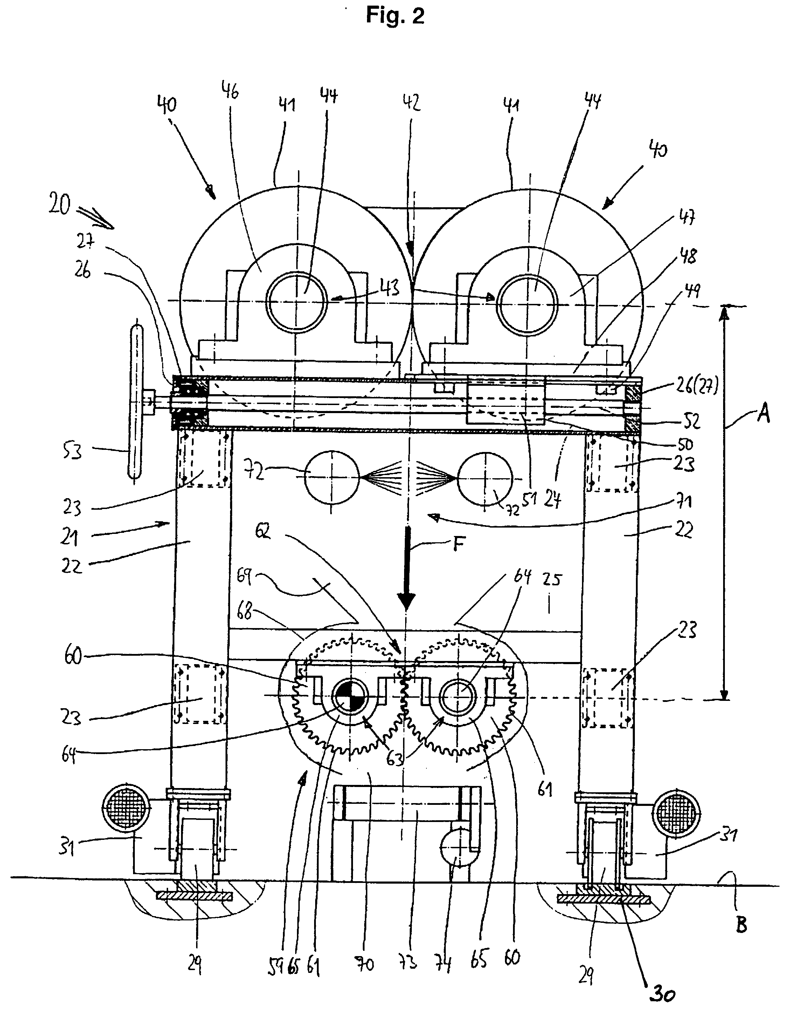

Zur Lagerung des ersten Wellenpaars 43 sind auf den oberen Querträgern 24 vier Lagerböcke 46, 47 angebracht, wobei ein Lagerbockpaar 46, in Fig. 2 das linke, fest auf dem oberen Querträger 24 befestigt ist, während die rechten beiden Lagerböcke 47 jeweils auf einem Schlitten 48 montiert sind.

Letztere sitzen auf den Querträgern 24 längsverschieblich, z. B. mittels in (nicht sichtbaren) Längsschlitzen geführten Bolzen 49. Jeder Schlitten 48 trägt an seiner Unterseite einen Mitnehmerblock 50, der durch den Längsschlitz hindurchgreift und mit einer parallel zur Längsrichtung des Querträgers 24 verlaufenden Gewindebohrung 51 versehen ist. In diese ist jeweils eine Gewindestange 52 eingeschraubt, die an den Stirnseiten 26 jedes Querträgers 24 axialfest-drehbar gelagert ist. An zumindest einer Stirnseite 26 des Querträgers 24 ragt die Gewindestange 52 aus ihrem Lager 27 heraus; endseitig trägt sie ein Handrad 53. Durch dessen Verdrehung werden die Schlitten 48 mit den Lagerböcken 47 in Richtung der Querträger 24, also senkrecht zur Längsrichtung der Kühlwalzen 40 verschoben, um den Abstand bzw. Spalt 42 zwischen den Walzenmänteln 41 auf einen gewünschten Wert einzustellen. Zweckmäßig sind die Gewindestangen 52 und/oder die Handräder 52 miteinander gekoppelt, so daß stets eine gleichmäßige Einstellung des Spalts 42 gewährleistet ist. Das Handrad 53 kann auch durch einen elektrischen Antrieb ergänzt oder ersetzt werden, um die Spalteinstellung bei Bedarf automatisch zu bewirken.

Unterhalb der Kühlwalzen 40 sind auf einem zweiten Wellenpaar 63 zwei parallele Brecherwalzen 60 gelagert. Diese liegen in einem Abstand A unterhalb der Kühlwalzen 40 horizontal nebeneinander und greifen mit umfangsseitigen Brechzähnen 61 ineinander, wobei der Eingriffsbereich 62 der Brecherwalzen 60 mit der vertikalen Fallrichtung F unterhalb des Spalts 42 fluchtet. Jede Welle 64 des unteren Wellenpaars 63 ist in Lagerböcken 65 axialfest-drehbar gelagert und endseitig über ein Getriebe 67 mit einem gemeinsamen Antriebsmotor 66 verbunden, der die Brecherwalzen 60 in eine gegenläufige Drehbewegung versetzt. Im Ausführungsbeispiel von Fig. 2 sind die Lagerböcke 65 fest an den unteren Querträgern 25 des Gestells angebracht. Sie können jedoch - wie die Lagerböcke 46, 47 der Kühlwalzen 40 - verstellbar ausgebildet sein, damit man den Abstand der Brecherwalzen 60 entsprechend einer gewünschten Granulatgröße verändern kann. Um die zwischen den Kühlwalzen 40 abgeschreckte und als Granulat durch den Spalt 42 herabfallende Schmelzmasse von den Brecherwalzen 60 voll zu erfassen, sind diese von einem Gehäuse 68 umschlossen, das an seiner Oberseite eine trichterförmige Eintrittsöffnung 69 und an seiner Unterseite eine Austrittsöffnung 70 aufweist.

Zur Kühlung der Mantelflächen 41 auf eine für das Abschrecken der Emailschmelze geeignete Temperatur ist innerhalb der Kühlwalzen 40 ein (nicht dargestelltes) Sprührohr vorgesehen, das unmittelbar unterhalb der Mantelflächen 41 verläuft und durch das Kühlmedium, z.B. Wasser, in den Spaltbereich 42 gesprüht wird. Die Zuführung des Kühlwassers erfolgt über das erste Wellenpaar 43, das hierzu Hohlwellen 44 hat, die an ihren den Antriebsmotoren 54 gegenüberliegenden Enden Anschlußflansche 45 für eine Zu- bzw. eine Abflußleitung aufweisen.

Zur intensiven Abkühlung der an den Kühlwalzen 40 abgeschreckten Schmelze sind in dem Fallbereich 71 zwischen den Kühlwalzen 40 und den Brecherwalzen 60 parallel hierzu zwei Leitungsrohre 72 vorgesehen, die an ihren einander zugewandten Längsseiten (nicht sichtbare) Düsenöffnungen aufweisen. Durch diese kann mit Hilfe einer (ebenfalls nicht gezeigten) Kühlmittelversorgung ein Kühlmittel, z. B. Luft, in die Fallstrecke 71 unterhalb der Kühlwalzen 40 eingeführt werden, das den nach unten fallenden Granalien ihre Restwärme entzieht.

Die Rollen 29 des Gestells 21 sind an den unteren Enden der Eckstützen 22 befestigt und laufen auf Schienen 30 (Fig. 2), die in dem Boden B eingelassen sein können und senkrecht zur Drehachse D des Trommelofens 12 ausgerichtet sind. Dadurch ist es möglich, die Kühl- bzw. Brecherwalzen 40, 60 entlang ihrer Längsrichtung L zu verschieben. Die Schienen 30 gewährleisten hierbei senkrecht zur Drehbewegung des Drehrohrofens 12 eine exakte Linearbewegung der gesamten Kühl- und Granuliervorrichtung 10. Seitlich an den Eckstützen 22 sind Motoren 31 angebracht, die das Gestell 21 - gegebenenfalls vollautomatisch - in die gewünschte Richtung bewegen.

Unmittelbar unter der Austrittsöffnung 70 des Gehäuses 68 der Brecherwalzen 60 befindet sich eine auf dem Boden B befestigte Förderstrecke 73, beispielsweise eine Schwingrinne, die von einem Antrieb 74 in Vibration versetzt wird und auf diese Weise das fertige Granulat in einen (nicht gezeigten) Bunker oder zur Weiterverarbeitung abtransportiert. Die Förderstrecke 73 reicht über den gesamten Weg, den die Kühl- und Granuliereinrichtung 20 zurücklegen kann; in jeder ihrer Stellungen werden so die von den Brecherwalzen 60 erzeugten Granalien von der Auffangrinne 73 aufgefangen.

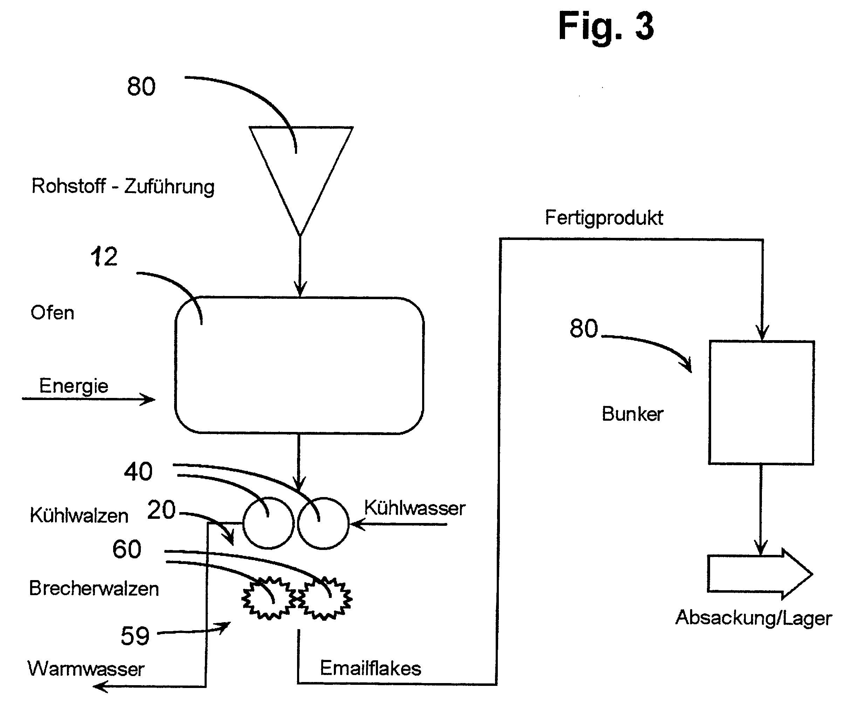

Fig. 3 zeigt eine schematische Darstellung des erfindungsgemäßen Verfahrens. Das Gemenge wird nach Zusammenstellung, Abwägung und Mischung der einzelnen Rohstoffe über einen Füllbunker 80 in den Drehrohrofen 12 gefüllt und je nach Gemenge-Zusammensetzung unter Zuführung von Energie bei Schmelztemperaturen zwischen 1.100 °C und 1.400 °C geschmolzen. Die Schmelzdauer im diskontinuierlichen Drehrohrofen liegt je nach Emailtyp zwischen 2 h und 4 h. Durch die ständige Drehbewegung des Ofens 12 wird das Gemenge von Beginn an ständig gut verteilt.

Hat die Schmelzmasse erforderlichen Schmelzzustand erreicht, wird sie über die Ablaßöffnung des Drehofens 12 abgelassen und mittels der Kühl- und Granuliereinrichtung 20 gleichmäßig auf die Kühiwalzen 40 verteilt. Mit ihren Mantelflächen 41 entziehen diese der Schmelzmasse schlagartig ihre Wärme. Zweckmäßig bewegt sich die Kühl- und Granuliereinrichtung 20 von einer Außenposition (Fig. 1), in der sich die Ablaßöffnung des Ofens 12 über dem linken Ende der Kühlwalzen 40 befindet, in eine (nicht gezeigte) Gegen-Endposition, in der die Ablaßöffnung über dem rechten Ende der Kühlwalzen 40 liegt. Auch die entgegengesetzte Bewegungsrichtung ist möglich. Durch die gleichzeitige Rotation der Kühlwalzen 40 wird die aus dem Drehrohrofen 12 abgelassene Schmelzmasse gleichmäßig auf beiden Kühlwalzen 40 verteilt, so daß nahezu die gesamte Mantelfläche 41 zum Abschrecken verwendet und deren Kühlleistung optimal genutzt wird. Das in den Kühlwalzen 40 verwendete Kühlwasser wird nicht verschmutzt und kann für andere Zwecke, beispielsweise zur Wärmerückgewinnung genutzt werden.

Die abgeschreckte Schmelzmasse gelangt über den Spalt 42 zwischen den Kühlwalzen 40 durch die Fallstrecke 71 zwischen die Brecherwalzen 60, wo die Zerkleinerung zu Granulat erfolgt. Der Abstand A zwischen den Kühl- und Brecherwalzen 40; 60 ist dabei so gewählt, daß die Schmelzmasse bei Erreichen des Brecherwerks vollständig erstarrt ist. Die Fördereinrichtung 73, 74 darunter leitet das fertige Granulat in einen Bunker oder leitet es der Weiterverarbeitung zu.

Um auch bei kürzeren Abständen A oder bei großen Mengen an Schmelzmasse ein vollständiges Erstarren der Schmelze sicherzustellen, kann in den Fallraum 71 unter den Kühlwalzen 40 zusätzlich Kühlluft eingeblasen werden, namentlich über die Düsenöffnungen in den Leitungsrohren 72. Man kann auch gerade nur soviel Wasser in den Fallraum 71 einsprühen, wie von den teilweise erstarrten Granalien verdampft. Verschmutzes Abwasser wird dadurch vermieden; die Granalien können optimal gebrochen werden.

Die Erfindung ist nicht auf eine der vorbeschriebenen Ausführungsformen beschränkt, sondern in vielfältiger Weise abwandelbar. So können sämtliche Wellenpaare 43, 63 mit nur einem Antriebsmotor verbunden sein, die zudem miteinander und/oder mit den Antriebsmotoren 31 des Gestells 21 gekoppelt sein können. Auf diese Weise läßt sich bei Bedarf mit geringem Aufwand eine vollautomatische Steuerung des Schmelz- und Abschreckprozesses realisieren, was die rationelle und kostengünstige Fertigung der Emailfritten unterstützt.

Man erkennt, daß eine Vorrichtung 10 zur erfindungsgemäßen Herstellung von Emailfritten aus einem Rohstoffgemisch einen diskontinuierlich betriebenen Drehrohrofen 12 zum Einschmelzen des Gemenges zu einer feuerflüssigen Schmelze hat. Unterhalb einer Ablaßöffnung ist zum Abschrecken und Granulieren der austretenden Schmelze eine Kühl- und Granuliereinrichtung 20 vorhanden, die wenigstens zwei gegenläufig angetriebene, von einem Kühlmittel durchströmte Kühlwalzen 40 mit Kühlflächen 41 sowie zwei gegenläufig angetriebene, fluchtend darunter angeordnete Brecherwalzen 60 aufweist Die Walzen 40, 60 sind relativ zur Ablaßöffnung, bevorzugt senkrecht zur Drehachse D des Drehrohrofens 12 bewegbar (verfahrbar). Wichtige Vorteile der Erfindung beruhen darauf, daß ein herkömmliches Wasserbad - aus dem beträchtliche Mengen belastetes Wasser abgeführt werden müssen - und eine nachgeschaltete Warmluft-Trocknung vermieden werden, indem ein Drehrohrofen mit kühlmitteldurchströmten Kühlwalzen kombiniert wird, die durch ihre Verfahrbarkeit rasch eine gleichmäßige Verteilung des Emails bewirken. Beispielsweise können erfindungsgemäß rund 1.000 kg Email binnen etwa 10 min zu Flakes von hoher Qualität verwalzt werden.

Sämtliche aus den unabhängigen Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Abstand
- B: Boden
- D: Drehachse
- F: Fallrichtung
- L: Längsausdehnung

- 10: Vorrichtung
- 12: Drehrohrofen
- 14: Stahlmantel
- 15: Stirnseite
- 17: Antrieb
- 20: Kühl- u. Granuliereinrichtung
- 21: Gestell
- 22: Eckstützen
- 23: Längsträger
- 24: oberer Querträger
- 25: unterer Querträger
- 26: Stirnseite
- 27: Lager
- 29: Rollen
- 30: Schiene
- 31: Motor
- 40: Kühlwalze
- 41: Kühlfläche/Mantelfläche
- 42: Spalt
- 43: erstes Wellenpaar
- 44: Welle
- 45: Anschlußflansch
- 46,47: Lagerbock
- 48: Schlitten
- 49: Bolzen
- 50: Mitnehmerblock
- 51: Gewindebohrung
- 52: Gewindestange
- 53: Handrad
- 54: Antriebsmotor
- 55: Getriebe
- 59: Zerkleinerungseinrichtung
- 60: Brecherwalze
- 61: Brechzähnen
- 62: Eingriffsbereich
- 63: zweites Wellenpaar
- 64: Welle
- 65: Lagerbock
- 66: Antriebsmotor
- 67: Getriebe
- 68: Gehäuse
- 69: Eintrittsöffnung
- 70: Austrittsöffnung
- 71: Fallraum
- 72: Leitungsrohr
- 73: Förderstrecke
- 74: Antrieb
- 80: Füllbunker

## Patentansprüche

1. Vorrichtung (10) zur Herstellung von Emailfritten aus einem Rohstoffgemisch (Gemenge) mit einem diskontinuierlich betriebenen Drehrohrofen (12) zum Einschmelzen des Gemenges zu einer feuerflüssigen Schmelze und wenigstens einer unter einer Ablaßöffnung des Drehrohrofens (12) angeordneten Kühl- und Granuliereinrichtung (20) zum Abschrecken und Granulieren der aus der Ablaßöffnung austretenden Schmelze, dadurch **gekennzeichnet**, daß die Kühl- und Granuliereinrichtung (20) wenigstens zwei einander zugeordnete von einem Kühlmittel durchströmte Kühlflächen (41) aufweist, die relativ zur Ablaßöffnung bewegbar sind.

2. Vorrichtung nach Anspruch 1, dadurch **gekennzeichnet,** daß die Kühlflächen (41) entlang einer ihrer Längsausdehnungen (L) sowie senkrecht zur Drehachse (D) des Drehrohrofens (12) und/oder relativ zueinander bewegbar sind.

3. Vorrichtung nach Anspruch 1 oder 2, dadurch **gekennzeichnet**, daß die Kühlflächen (41) in konstantem Abstand zur Ablaßöffnung des Drehrohrofens (12) bewegbar sind.

4. Vorrichtung nach einem der Ansprüche 1 bis 3, dadurch **gekennzeichnet**, daß der Abstand zwischen den Kühlflächen (41) und der Ablaßöffnung des Ofens (12) einstellbar ist.

5. Vorrichtung (10) zur Herstellung von Emailfritten aus einem Rohstoffgemisch (Gemenge) mit einem diskontinuierlich betriebenen Drehrohrofen (12) zum Einschmelzen des Gemenges zu einer feuerflüssigen Schmelze und wenigstens einer unter einer Ablaßöffnung des Drehrohrofens (12) angeordneten Kühl- und Granuliereinrichtung (20) zum Abschrecken und Granulieren der aus der Ablaßöffnung austretenden Schmelze, **gekennzeichnet** durch die Kombination eines Drehrohrofens (12) mit wenigstens zwei von einem Kühlmedium durchströmten, relativ zu dem Ofen (12) bewegbaren Kühlwalzen (40), die mittels eines Antriebs (54, 55) gegenläufig angetrieben sind.

6. Vorrichtung nach einem der Ansprüche 1 bis 5, dadurch **gekennzeichnet**, daß jede Kühlfläche (41) als Mantelfläche einer drehbar um eine Achse gelagerten Kühlwalze (40) ausgebildet ist.

7. Vorrichtung nach Anspruch 6, dadurch **gekennzeichnet,** daß die Kühlwalzen (40) parallel zueinander und senkrecht zur Drehachse (D) des Drehrohrofens (12) angeordnet sind.

8. Vorrichtung nach Anspruch 6 oder 7, dadurch **gekennzeichnet,** daß die Kühlwalzen (40) entlang ihrer Drehachsen und senkrecht zur Drehachse (D) des Drehrohrofens (12) verfahrbar sind.

9. Vorrichtung nach einem der Ansprüche 6 bis 8, dadurch **gekennzeichnet**, daß die Walzen (40) mittels motorischer Antriebe (54, 55) insbesondere gegenläufig angetrieben sind.

10. Vorrichtung nach einem der Ansprüche 6 bis 9, dadurch **gekennzeichnet,** daß die Walzen (40) von einem gemeinsamen Antrieb angetrieben sind.

11. Vorrichtung nach einem der Ansprüche 6 bis 10, dadurch **gekennzeichnet,** daß die Walzen (40) zwischen den Mantelflächen (41) einen vertikalen Spalt (42) von einstellbarer Breite bilden.

12. Vorrichtung nach einem der Ansprüche 6 bis 11, dadurch **gekennzeichnet**, daß die Mantelflächen (41) der Walzen (40) glatt ausgebildet sind.

13. Vorrichtung nach einem der Ansprüche 6 bis 11, dadurch **gekennzeichnet**, daß die Mantelflächen (41) der Walzen (40) parallel oder schräg zu den Walzenachsen verlaufende Rillen, Vertiefungen aufweisen.

14. Vorrichtung nach einem der Ansprüche 6 bis 13, dadurch **gekennzeichnet**, daß die Länge der Walzen (40) wenigstens 1,0 m beträgt.

15. Vorrichtung nach Anspruch 14, dadurch **gekennzeichnet**, daß der Durchmesser der Walzen (40) über die Walzenlänge variabel ist, bevorzugt mit stetigen Übergängen in der Walzenmitte größer als an den Walzenenden.

16. Vorrichtung nach einem der Ansprüche 6 bis 15, dadurch **gekennzeichnet**, daß die Walzen (40) von dem Kühlmittel durchströmt sind, insbesondere von Wasser oder Öl.

17. Vorrichtung wenigstens nach einem der Ansprüche 6 bis 16, dadurch **gekennzeichnet,** daß unterhalb der Kühlwalzen (40) eine Einrichtung (59) zum Zerkleinern der abgeschreckten Schmelzmasse angeordnet ist.

18. Vorrichtung nach Anspruch 17, dadurch **gekennzeichnet**, daß der Abstand (A) zwischen der Zerkleinerungseinrichtung (59) und den Kühlwalzen (40) wenigstens 0,5 m beträgt, vorzugsweise 1 m und mehr.

19. Vorrichtung nach Anspruch 17 oder 18, dadurch **gekennzeichnet**, daß die Zerkleinerungseinrichtung (59) wenigstens zwei Brecherwalzen (60) aufweist, die parallel zu den Kühlwalzen (40) verlaufen und mittels eines Antriebs (66, 67) gegenläufig angetrieben sind.

20. Vorrichtung nach Anspruch 19, dadurch **gekennzeichnet**, daß die Brecherwalzen (60) mit umfangsseitig angeordneten Zähnen (61) oder Rippen ineinandergreifen.

21. Vorrichtung nach Anspruch 19 oder 20, dadurch **gekennzeichnet**, daß der Eingriffsbereich (62) der Brecherwalzen (60) vertikal fluchtend unter dem Spalt (42) der Kühlwalzen (40) angeordnet ist.

22. Vorrichtung nach einem der Ansprüche 19 bis 21, dadurch **gekennzeichnet**, daß der horizontale Abstand der Brecherwalzen (60) einstelloder nachstellbar ist.

23. Vorrichtung nach einem der Ansprüche 19 bis 22, dadurch **gekennzeichnet,** daß die Brecherwalzen (60) von einem Gehäuse (68) umschlossen sind, das eine trichterförmige Eintrittsöffnung (69) sowie eine Austrittsöffnung (70) aufweist.

24. Vorrichtung nach einem der Ansprüche 19 bis 23, dadurch **gekennzeichnet,** daß die Kühlwalzen (40) und die Brecherwalzen (60) in einem gemeinsamen Gestell (21) gelagert sind.

25. Vorrichtung nach Anspruch 24, dadurch **gekennzeichnet,** daß das Gestell (21) entlang der Längsrichtung (L) der Kühlwalzen (40) verfahrbar ausgebildet ist, bevorzugt auf Schienen (30) und/oder mit eigenem Antrieb (31).

26. Vorrichtung nach einem der Ansprüche 19 bis 25, dadurch **gekennzeichnet**, daß die Antriebe (54, 55; 66, 67) der Kühlwalzen (40) und der Brecherwalzen (60) miteinander gekoppelt sind.

27. Vorrichtung nach einem der Ansprüche 24 bis 26, dadurch **gekennzeichnet,** daß die Drehbewegung der Kühlwalzen (40) und/oder der Brecherwalzen (60) mit der Linearbewegung des Gestells (21) gekoppelt ist.

28. Vorrichtung nach Anspruch 26 oder 27, dadurch **gekennzeichnet**, daß die Koppelung (54, 55, 66, 67) mechanisch und/oder elektronisch ausgebildet ist.

29. Vorrichtung nach einem der Ansprüche 19 bis 28, dadurch **gekennzeichnet**, daß zwischen den Kühlwalzen (40) und den Brecherwalzen (60) eine Sprüheinrichtung (72) vorhanden ist.

30. Vorrichtung nach einem der Ansprüche 19 bis 29, dadurch **gekennzeichnet**, daß unterhalb der Brecherwalzen (60) eine Fördereinrichtung (73, 74) angeordnet ist, namentlich eine Schwingrinne.

31. Verfahren zur Herstellung von Emailfritten aus einem Rohstoffgemisch (Gemenge) in diskontinuierlichem Betrieb eines Drehrohrofens (12) zum Einschmelzen des Gemenges zu einer feuerflüssigen Schmelze einer unterhalb des Drehrohrofens (12) angeordneten Kühl- und Granuliereinrichtung (20) zum Abschrecken und Granulieren zugeführt wird, dadurch **gekennzeichnet,** daß die Kühl- und Granuliereinrichtung (20) während des Ablassens der Schmelze relativ zur Ablaßöffnung des Drehrohrofens (12) bewegt wird.

32. Verfahren nach Anspruch 31, daß man die gekühlte Schmelze einer Zerkleinerungseinrichtung (59) zuführt, vorzugsweise auf einer Fallstrecke (71) unter Zwischenschaltung eines Sprühvorganges.

33. Verfahren nach Anspruch 32, dadurch **gekennzeichnet**, daß als Sprühmittel Luft verwendet wird.

## Claims

1. Apparatus (10) for making enamel frits from a raw-material mixture (batch), comprising a discontinuously operated rotary furnace (12) for fusing the batch to obtain a hot melt and at least one cooling and granulating device (20) arranged below an outlet opening of the rotary furnace (12) for quenching and granulating the melt discharged from the outlet opening, **wherein** the cooling and granulating device (20) has at least two interrelated cooling surfaces (41) in which a cooling agent is passed and which are movable in relation to the outlet opening.

2. Apparatus according to claim 1, **wherein** the cooling surfaces (41) are movable along one of their longitudinal dimensions (L) as well as perpendicular to the axis of rotation (D) of the rotary furnace (12) and/or in relation to each other.

3. Apparatus according to claim 1 or claim 2, **wherein** the cooling surfaces (41) are movable at a constant distance to the outlet opening of the rotary furnace (12).

4. Apparatus according to any one of claims 1 to 3, **wherein** the distance between the cooling surfaces (41) and the outlet opening of the furnace (12) is adjustable.

5. Apparatus (10) for making enamel frits from a raw-material mixture (batch), comprising a discontinuously operated rotary furnace (12) for fusing the batch to obtain a hot melt and at least one cooling and granulating device (20) arranged below an outlet opening of the rotary furnace (12) for quenching and granulating the melt discharged from the outlet opening, **characterized** by the combination of a rotary furnace (12) with at least two cooling rollers (40) in which a cooling agent is passed, which are movable in relation to the furnace (12) and which are driven in opposite directions by means of a drive (54, 55).

6. Apparatus according to any one of claims 1 to 5, **wherein** each cooling surface (41) is designed as a jacket surface of a cooling roller (40) that is supported for pivoting around an axis.

7. Apparatus according to claim 6, **wherein** the cooling rollers (40) are arranged parallel to each other and perpendicular to the axis of rotation (D) of the rotary furnace (12).

8. Apparatus according to to claim 6 or claim 7, **wherein** the cooling rollers (40) are movable along their axes of rotation and perpendicular to the axis of rotation (D) of the rotary furnace (12).

9. Apparatus according to any one of claims 6 to 8, **wherein** the rollers (40) are driven by motor drives (54, 55), in particular in opposite directions.

10. Apparatus according to any one of claims 6 to 9, **wherein** the rollers (40) are driven by a common drive.

11. Apparatus according to any one of claims 6 to 10, **wherein** the rollers (40) form a vertical gap (42) of adjustable width between the generated surfaces (41).

12. Apparatus according to any one of claims 6 to 11, **wherein** the jacket surfaces (41) of the rollers (40) are smooth.

13. Apparatus according to any one of claims 6 to 11, **wherein** the jacket surfaces (41) of the rollers (40) have grooves or dimples running parallel to or at an angle to the roller axes.

14. Apparatus according to any one of claims 6 to 13, **wherein** the length of the rollers (40) is at least 1.0 m.

15. Apparatus according to claim 14, **wherein** the diameter of the rollers (40) is variable over the roller length, preferably being greater in the middle of the rollers than at their ends, with steady transitions.

16. Apparatus according to any one of claims 6 to 15, **wherein** the cooling agent, in particular water or oil, flows through the rollers (40).

17. Apparatus according to at least any one of claims 6 to 16, **wherein** a device (59) for crushing the quenched melt is arranged below the cooling rollers (40).

18. Apparatus according to claim 17, **wherein** the distance (A) between the crushing device (59) and the cooling rollers (40) is at least 0.5 m, preferably 1 m or more.

19. Apparatus according to claim 17 or claim 18, **wherein** the crushing device (59) has at least two crushing rollers (60) running parallel to the cooling rollers (40) and driven in opposite directions by means of a drive (66, 67).

20. Apparatus according to claim 19, **wherein** the crushing rollers (60) engage each other with circumferentially arranged teeth (61) or ribs.

21. Apparatus according to claim 19 or claim 20, **wherein** the engaging zone (62) of the crushing rollers (60) is arranged in vertical alignment below the gap (42) of the cooling rollers (40).

22. Apparatus according to any one of claims 19 to 21, **wherein** the horizontal distance between the crushing rollers (60) is adjustable or readjustable.

23. Apparatus according to any one of claims 19 to 22, **wherein** the crushing rollers (60) are enclosed by a casing (68) that has a funnel-shaped inlet opening (69) as well as an outlet opening (70).

24. Apparatus according to any one of claims 19 to 23, **wherein** the cooling rollers (40) and the crushing rollers (60) are mounted in a common frame (21).

25. Apparatus according to claim 24, **wherein** the frame (21) is displaceable along the longitudinal direction (L) of the cooling rollers (40), preferably on rails (30) and/or with an intrinsic drive (31).

26. Apparatus according to any one of claims 19 to 25, **wherein** the drives (54, 55; 66, 67) of the cooling rollers (40) and of the crushing rollers (60) are coupled to each other.

27. Apparatus according to any one of claims 24 to 26, **wherein** the rotation of the cooling rollers (40) and/or of the crushing rollers (60) is coupled with the linear movement of the frame (21).

28. Apparatus according to claim 26 or claim 27, **wherein** the coupling (54, 55, 66, 67) is mechanical and/or electronic.

29. Apparatus according to any one of claims 19 to 28, **wherein** there is a spray device (72) is provided between the cooling rollers (40) and the crushing rollers (60).

30. Apparatus according to any one of claims 19 to 29, **wherein** a conveying device (73, 74) is arranged below the crushing rollers (60), in particular a vibrating trough.

31. Process for making enamel frits from a raw-material mixture (batch) in discontinuous operation of a rotary furnace (12) for fusing the batch to obtain a hot melt which is fed to a cooling and granulating device (20) arranged below the rotary furnace (12) for quenching and granulating, **wherein** the cooling and granulating device (20) is moved in relation to the outlet opening of the rotary furnace (12) during discharge of the melt.

32. Process according to claim 31, **wherein** the cooled melt is fed to a crushing device (59), preferably through a downtake section (71) with an interposed spraying operation.

33. Process according to claim 32, **wherein** air is used as spraying agent.

## Revendications

1. Appareil (10) pour fabriquer de la fritte d'émail à partir d'une mixture de matières premières (mélange), avec un four tournant (12) fonctionnant en service discontinu pour faire fondre le mélange en une masse fondue, et avec au moins un dispositif de refroidissement et de granulation (20) disposé sous une ouverture d'écoulement du four tournant (12) et servant à refroidir brusquement et granuler la masse fondue sortant de la sortie d'écoulement, **caractérisé** en ce que le dispositif de refroidissement et de granulation (20) présente au moins deux surfaces de refroidissement (41) associées l'une à l'autre, traversées par un agent refroidisseur et mobiles par rapport à la sortie d'écoulement.

2. Appareil selon la revendication 1, **caractérisé** en ce que les surfaces de refroidissement (41) sont mobiles le long de leurs étendues longitudinales (L) et perpendiculairement par rapport à l'axe de rotation (D) du four tournant (12) et/ou par rapport à elles-mêmes.

3. Appareil selon la revendication 1 ou 2, **caractérisé** en ce que les surfaces de refroidissement (41) peuvent être déplacées à une distance constante de l'ouverture d'écoulement du four tournant (12).

4. Appareil selon l'une des revendications 1 à 3, **caractérisé** en ce que la distance entre les surfaces de refroidissement (41) et l'ouverture d'écoulement du four (12) est réglable.

5. Appareil (10) pour fabriquer de la fritte d'émail à partir d'une mixture de matières premières (mélange), avec un four tournant (12) fonctionnant en service discontinu pour faire fondre le mélange en une masse fondue, et avec au moins un dispositif de refroidissement et de granulation (20) disposé sous une ouverture d'écoulement du four tournant (12) et servant à refroidir brusquement et granuler la masse fondue sortant de la sortie d'écoulement, **caractérisé** par la combinaison d'un four tournant (12) avec au moins deux cylindres de refroidissement (40) traversés par un agent refroidisseur et mobiles par rapport au four (12), qui sont entraînés en sens opposé par un dispositif d'entraînement (54, 55).

6. Appareil selon l'une des revendications 1 à 5, **caractéri**s é en ce que chaque surface de refroidissement (41) est conçue en tant qu'enveloppe d'un cylindre de refroidissement (40) logé rotativement autour d'un axe.

7. Appareil selon la revendication 6, **caractérisé** en ce que les cylindres de refroidissement (40) sont agencés parallèles l'un à l'autre et perpendiculaires à l'axe de rotation (D) du four tournant (12).

8. Apparaeil selon la revendication 6 ou 7, **caractérisé** en ce que les cylindres de refroidissement (40) peuvent être déplacés le long de leurs axes de rotation et perpendiculairement à l'axe de rotation (D) du four tournant (12).

9. Appareil selon l'une des revendications 6 à 8, **caractérisé** en ce que les cylindres (40) sont entraînés, notamment en sens opposé, au moyen d'entraînements à moteur (54, 55).

10. Appareil selon l'une des revendications 6 à 9, **caractérisé** en ce que les cylindres (40) sont entraînés par un entraînement commun.

11. Appareil selon l'une des revendications 6 à 10, **caractérisé** en ce que les cylindres (40) forment entre les enveloppes (41) une fente verticale (42) de largeur réglable.

12. Appareil selon l'une des revendications 6 à 11, **caractérisé** en ce que les enveloppes (41) des cylindres (40) sont lisses.

13. Appareil selon l'une des revendications 6 à 11, **caractérisé** en ce que les enveloppes (41) des cylindres (40) présentent des rainures ou creux de direction parallèle ou oblique par rapport aux axes des cylindres.

14. Appareil selon l'une des revendications 6 à 13, **caractérisé** en ce que la longueur des cylindres (40) est d'au moins 1,0 m.

15. Appareil selon la revendication 14, **caractérisé** en ce que le diamètre des cylindres (40) est variable sur la longueur des cylindres, de préférence avec des transitions constantes au centre des cylindres plus grandes qu'aux extrémités des cylindres.

16. Appareil selon l'une des revendications 6 à 15, **caractérisé** en ce que les cylindres (40) sont traversés par un agent refroidisseur, notamment de l'eau ou de l'huile.

17. Appareil au moins selon une des revendications 6 à 16, **caractérisé** en ce qu'un dispositif de broyage (59) de la masse fondue et refroidie brusquement est disposé sous les cylindres de refroidissement (40).

18. Appareil selon la revendication 17, **caractérisé** en ce que la distance (A) entre le dispositif de broyage (59) et les cylindres de refroidissement (40) est d'au moins 0,5 m, de préférence 1 m et plus.

19. Appareil selon la revendication 17 ou 18, **caractérisé** en ce que le dispositif de broyage (59) présente au moins deux cylindres de broyage (60) qui sont de direction parallèle aux cylindres de refroidissement (40) et qui sont entraînés en sens opposé par un entraînement (66, 67).

20. Appareil selon la revendication 19, **caractérisé** en ce que les cylindres de broyage (60) s'engrènent avec des dents (61) ou nervures disposées sur la circonférence.

21. Appareil selon la revendication 19 ou 20, **caractérisé** en ce que le secteur d'engrènement (62) des cylindres de broyage (60) est aligné verticalement sous la fente (42) des cylindres de refroidissement (40).

22. Appareil selon l'une des revendications 19 à 21, **caractérisé** en ce que la distance horizontale entre les cylindres de broyage (60) est réglable ou ajustable.

23. Appareil selon l'une des revendications 19 à 22, **caractérisé** en ce que les cylindres de broyage (60) sont renfermés dans un carter (68), lequel présente une ouverture d'admission (69) en forme d'entonnoir et une ouverture de dégagement (70).

24. Appareil selon l'une des revendications 19 à 23, **caractérisé** en ce que les cylindres de refroidissement (40) et les cylindres de broyage (60) sont logés dans un châssis commun (21).

25. Appareil selon la revendication 24, **caractérisé** en ce que le châssis (21) est conçu mobile le long de la direction longitudinale (L) des cylindres de refroidissement (40), de préférence sur des rails (30) et/ou avec un entraînement individuel (31).

26. Appareil selon l'une des revendications 19 à 25, **caractérisé** en ce que les entraînements (54, 55; 66, 67) des cylindres de refroidissement (40) et des cylindres de broyage (60) sont accouplés.

27. Appareil selon l'une des revendications 24 à 26, **caractérisé** en ce que le mouvement rotatif des cylindres de refroidissement (40) et/ou des cylindres de broyage (60) est couplé au mouvement linéaire du châssis (21).

28. Appareil selon la revendication 26 ou 27, **caractérisé** en ce que l'accouplement (54, 55, 66, 67) est mécanique et/ou électronique.

29. Appareil selon l'une des revendications 19 à 28, **caractérisé** en ce qu'un dispositif de pulvérisation (72) est placé entre les cylindres de refroidissement (40) et les cylindres de broyage (60).

30. Appareil selon l'une des revendications 19 à 29, **caractérisé** en ce qu'un dispositif de convoyage (73, 74), notamment un couloir vibrant, est disposé sous les cylindres de broyage (60).

31. Procédé pour fabriquer de la fritte d'émail à partir d'une mixture de matières premières (mélange) en service discontinu d'un four tournant (12) servant à faire fondre le mélange en une masse fondue, laquelle est amenée dans un dispositif de refroidissement et de granulation (20) disposé sous le four tournant (12) et servant à refroidir brusquement et granuler, **caractérisé** en ce que pendant l'écoulement de la masse fondue, le dispositif de refroidissement et de granulation (20) est déplacé par rapport à l'ouverture d'écoulement du four tournant 12).

32. Procédé selon la revendication 31, **caractérisé** en ce que l'on amène la masse fondue et refroidie dans un dispositif de broyage (59), de préférence dans un espace de chute (71), avec intégration d'une opération de pulvérisation.

33. Procédé selon la revendication 32, **caractérisé** en ce que comme agent pulvérisé, on utilise de l'air.
